# EUROPÄISCHE PATENTSCHRIFT

(11) **EP 2 504 198 B1**
(45) Veröffentlichungstag und Bekanntmachung des Hinweises auf die Patenterteilung: **27.05.2015**
(21) Anmeldenummer: 10785345.9
(22) Anmeldetag: 22.11.2010
(51) Int. Cl.: B60N 2/36

(54) **ANZEIGEVORRICHTUNG**
INDICATOR APPARATUS
DISPOSITIF INDICATEUR

(30) Priorität: 25.11.2009 DE 102009056155
(43) Veröffentlichungstag der Anmeldung: 03.10.2012
(73) Patentinhaber: Johnson Controls Components GmbH & Co. KG, 67657 Kaiserslautern (DE)
(72) Erfinder: WINDECKER, Volker, 67729 Sippersfeld (DE); HABER, Stefan, 66955 Pirmasens (DE); SCHMITT, Denise, 68519 Viernheim (DE); YASAROGLU, Kadir, 67655 Kaiserslautern (DE); HEIMANN, Bernd, 67829 Reiffelbach (DE); BRAUN, Tobias, 67245 Lambsheim (DE); MÜLLER, Peter, 67686 Mackenbach (DE)
(74) Vertreter: Wilhelm, Wolfgang
(86) Internationale Anmeldenummer: PCT/EP2010/007062
(87) Internationale Veröffentlichungsnummer: WO 2011/063920

(56) Entgegenhaltungen:
- WO-A1-2010/003587
- DE-A1- 10 142 486
- DE-B3-102004 045 988
- DE-B3-102004 052 746

## Beschreibung

Die Erfindung bezieht sich auf eine Anzeigevorrichtung zur Signalisierung der Nichtverriegelung einer umklappbaren Rückenlehne eines Sitzes, insbesondere eines Fondsitzes in einem Kraftfahrzeug, mit einer um eine Schwenkachse zwischen einer Verriegelungsstellung und einer Entriegelungsstellung schwenkbaren Handhabe, durch die eine Sperrklinke einer Verriegelungsvorrichtung zwischen einer Sperrstellung und einer Entsperrstellung mitnehmbar und über ein Übertragungselement ein in einer Führung zwischen einer in der Führung versenkten Nichtanzeigestellung und einer teilweise aus der Führung nach außen herausragenden Anzeigestellung geführtes Anzeigeglied verschiebbar antreibbar sind, wobei das Anzeigeglied bei in der Entriegelungsstellung befindlicher Handhabe durch Kraftbeaufschlagung seines aus der Führung herausragenden äußeren Endbereichs entgegen einer Federkraft in seine Nichtanzeigestellung bewegbar ist.

Derartige Anzeigevorrichtungen dienen dazu insbesondere bei Personenkraftwagen mit umklappbaren Rückenlehnen des Fondsitzes anzuzeigen, daß dessen Verriegelungsvorrichtung nicht ordnungsgemäß verrastet ist. Dadurch besteht die Gefahr eines nach vorne Klappens der Rückenlehne bei einer Verzögerung während des Fahrbetriebs, insbesondere beim Bremsen.

Bei einer solchen Anzeigevorrichtung ist es bekannt, daß das Anzeigeglied über eine Feder von der Handhabe von seiner Nichtanzeigestellung in seine Anzeigestellung bewegbar ist.

In umgekehrter Richtung von der Anzeigestellung in die Nichtanzeigestellung wird das Anzeigeglied formschlüssig von der Handhabe bewegt.

Ein derartige Anzeigevorrichtung ist unter anderem aus der DE 101 42 486 A1 bekannt.

Diese Art des Antriebs des Anzeigegliedes erfordert einen aufwendigen Aufbau.

Aufgabe der Erfindung ist es daher eine Anzeigevorrichtung der eingangs genannten Art zu schaffen, die einen einfachen Aufbau aufweist und einen geringen Montageaufwand erfordert.

Diese Aufgabe wird erfindungsgemäß dadurch gelöst, daß das Übertragungselement ein sowohl mit der Handhabe als auch mit dem Anzeigeglied fest verbundenes Federelement ist, wobei das Übertragungselement bei einem Verschiebeantrieb des Anzeigegliedes durch die Handhabe derart formsteif ist, daß das Übertragungselement sowohl als Druckstange wirkend den Verschiebeantrieb des Anzeigegliedes von der Nichtanzeigestellung in die Anzeigestellung als auch als Zugstange wirkend den Verschiebeantrieb des Anzeigegliedes von der Anzeigestellung in die Nichtanzeigestellung ausführt, und wobei das Übertragungselement bei in Entriegelungsstellung befindlicher Handhabe und einer Bewegung des Anzeigeglieds aus der Anzeigestellung in die Nichtanzeigestellung elastisch verformbar ist.

Durch diese Ausbildung erfüllt das Federelement eine Dreifachfunktion, indem es den Verschiebeantrieb des Anzeigegliedes sowohl von der Nichtanzeigestellung in die Anzeigestellung als auch von der Anzeigestellung in die Nichtanzeigestellung ausführt.

Darüber hinaus bewegt sich das Anzeigeglied bei einer äußeren Kraftbeaufschlagung aus der Anzeigestellung in die Führung hinein, ohne daß dabei die Handhabe betätigt wird.

Dies vermeidet Verletzungen bei Passagieren an dem hervorstehenden Anzeigeglied und führt auch zu einem Ausweichen bei anderweitiger Beaufschlagung, so daß die Betriebssicherheit der Anzeigevorrichtung erhöht wird.

Das Federelement kann seine Länge zwischen seinen Verbindungsstellen an Anzeigeglied und Handhabe verringernd elastisch verformbar sein und in einem radialen Abstand zur Schwenkachse an der Handhabe angreifen.

Es ist aber auch möglich, daß das Federelement ein zumindest annähernd radial zur Schwenkachse der Handhabe an der Handhabe befestigter Federarm ist, der quer zur Bewegungsrichtung des Anzeigeglieds mit seinem anderen Ende an dem Anzeigeglied anliegt.

In einer einfachen Ausbildung kann das Federelement eine quer zu ihrer Längserstreckung elastisch auslenkbare Zug-/Druckstange sein, die ein Federdraht oder eine Blattfeder oder auch ein Elastomerstab sein kann.

Bei einer normalen Aus- oder Einfahrbewegung des Anzeigeglieds führt die Steifigkeit der Zug-/Druckstange dazu, daß sich diese sich nicht verformt.

Erfährt das Anzeigeglied in seiner Anzeigestellung eine äußere Kraftbeaufschlagung, wird die Streifigkeit der Zug-/Druckstange überwunden und diese quer zu ihrer Längserstreckung zu einem Bogen elastisch ausgelenkt, so daß das Anzeigeelement in die Führung einfahren kann und in dieser geschützt ist.

Alternativ kann das Federelement ein Meanderfederelement aus einem federelastischen Werkstoff insbesondere aus einer meandrierenden Blattfeder bestehen.

Bei äußerer Kraftbeaufschlagung wird das Meanderelement seine Länge verringernd zusammengedrückt, so daß das Anzeigeglieds in die Führung einfahren kann.

Die Ausbildung als meandrierende Blattfeder verhindert ein seitliches Ausknicken des Meanderelements.

Eine weitere Ausbildung besteht darin, daß das Federelement eine Schraubendruckfeder ist.

Damit es nicht zu einem Ausknicken der Schraubendruckfeder kommt, kann das Anzeigeglied eine sich ganz oder teilweise annähernd koaxial durch die Windungen der Schraubendruckfeder oder parallel zur Schraubendruckfeder erstreckende Führungsstange aufweisen.

Es ist aber auch möglich, daß das Federelement zwei zueinander annähernd symmetrische Biegestäbe aufweist, die an ihren beiden Endbereichen fest miteinander verbunden sind und sich im mittleren Bereich ihrer Längserstreckung ein Ohr bildend voneinander entfernen.

Zur einfachen und schnellen Montage ohne das Erfordernis zusätzlicher Verbindungselemente kann das Federelement durch eine Klipsverbindung mit der Handhabe und/oder dem Anzeigeglied verbunden sein.

Zum Schutz gegen äußere Beeinflussung und Beschädigung kann die Anzeigevorrichtung in einem die Führung des Anzeigeglieds aufweisenden Gehäuse angeordnet sein.

Einfach und kostengünstig herstellbar ist das Federelement, wenn das Federelement ein Spritzgußteil aus einem federelastischen Kunststoff ist.

Eine zusätzliche Kostenreduzierung sowie eine Montagevereinfachung wird dadurch erreicht, daß Federelement und Anzeigeglied einteilig ausgebildet sind.

Zur Verringerung der Größe des Federelements kann das handhabeseitige Ende des Federelements über ein Zug-/Druckelement mit der Handhabe verbunden sein.

Dabei kann sich die Ausrichtung des Zug-/Druckelements während einer Schwenkbewegung der Handhabe der jeweiligen Position der Handhabe anpassen, wenn das Zug-/Druckelement um eine zur Schwenkachse der Handhabe parallele Gelenkachse schwenkbar an der Handhabe angelenkt ist.

Das Anzeigeglied kann vorzugsweise zylinderartig oder auch flachschieberartig ausgebildet sein.

Um eine erhöhte Aufmerksamkeit bei den Passagieren des Kraftfahrzeugs zu erzeugen, weist vorzugsweise das Anzeigeglied ganz oder teilweise eine Warnfarbe wie z.B. rot auf.

Ist das Anzeigeglied quer zu seiner Bewegungsrichtung elastisch verformbar, so kann es auch einer äußeren Kraftbeaufschlagung im wesentlichen quer zu seiner Verschieberichtung in der Führung ausweichen und Beschädigungen vermeiden.

Ausführungsbeispiele der Erfindung sind in der Zeichnung dargestellt und werden im folgenden näher beschrieben. Es zeigen
- Figur 1: eine Seitenansicht einer Verriegelungsvorrichtung in einer Sperrstellung mit einer Anzeigevorrichtung in einer Nichtanzeigestellung
- Figur 2: eine Seitenansicht der Verriegelungsvorrichtung nach Figur 1 in einer Entsperrstellung mit der Anzeigevorrichtung in einer Anzeigestellung
- Figur 3: eine Seitenansicht der Verriegelungsvorrichtung nach Figur 1 in der Entsperrstellung mit der Anzeigevorrichtung in der Nichtanzeigestellung
- Figur 4: eine Seitenansicht der Verriegelungsvorrichtung nach Figur 1 in der Entsperrstellung mit einem zweiten Ausführungsbeispiel einer Anzeigevorrichtung in der Nichtanzeigestellung
- Figur 5: die Verriegelungsvorrichtung und Anzeigevorrichtung nach Figur 4 in einer Frontansicht
- Figur 6: eine Seitenansicht der Verriegelungsvorrichtung nach Figur 1 in der Entsperrstellung mit der Anzeigevorrichtung nach Figur 4 in der Anzeigestellung
- Figur 7: die Verriegelungsvorrichtung und Anzeigevorrichtung nach Figur 6 in einer Frontansicht
- Figur 8: eine Seitenansicht der Verriegelungsvorrichtung nach Figur 1 in der Entsperrstellung mit einem dritten Ausführungsbeispiel einer Anzeigevorrichtung in der Nichtanzeigestellung
- Figur 9: eine Seitenansicht der Verriegelungsvorrichtung nach Figur 1 in der Entsperrstellung mit der Anzeigevorrichtung nach Figur 8 in der Anzeigestellung
- Figur 10: eine Seitenansicht der Verriegelungsvorrichtung nach Figur 1 in der Entsperrstellung mit einem vierten Ausführungsbeispiel einer Anzeigevorrichtung in der Anzeigestellung
- Figur 11: eine perspektivische Ansicht von Anzeigeglied und Federelement eines fünften Ausführungsbeispiels einer Anzeigevorrichtung
- Figur 12: eine Seitenansicht von Anzeigeglied und Federelement der Anzeigevorrichtung der Figuren 8 und 9
- Figur 13: eine Frontansicht von Anzeigeglied und Federelement der Anzeigevorrichtung der Figuren 8 und 9
- Figur 14: eine Seitenansicht von Anzeigeglied und Federelement eines sechsten Ausführungsbeispiels einer Anzeigevorrichtung
- Figur 15: eine Frontansicht von Anzeigeglied und Federelement der Anzeigevorrichtung nach Figur 14.

Die in den Figuren dargestellten Verriegelungsvorrichtungen weisen eine Verriegelungsgehäusehälfte 1 eines Verriegelungsgehäuses auf, die einen randseitig offenen Eintrittschlitz 2 aufweist, durch den ein nicht dargestellter, fest an einem Karosserieteil eines Kraftfahrzeugs angeordneter Verriegelungsbolzen quer einführbar ist. In einer Lagerbohrung 3 ist eine nicht dargestellte Drehfalle schwenkbar lagerbar, durch die in der Verschlußstellung der Drehfalle der in den Eintrittsschlitz 2 eingeführte Verriegelungsbolzen gefangen ist.

Zur Sicherung der Drehfalle in der Verschlußstellung besitzt die Drehfalle einen etwa radial hervorstehenden Ansatz, der in der Verschlußstellung der Drehfalle von einem Sperrhaken 6 einer Sperrklinke 4 hintergreifbar ist.

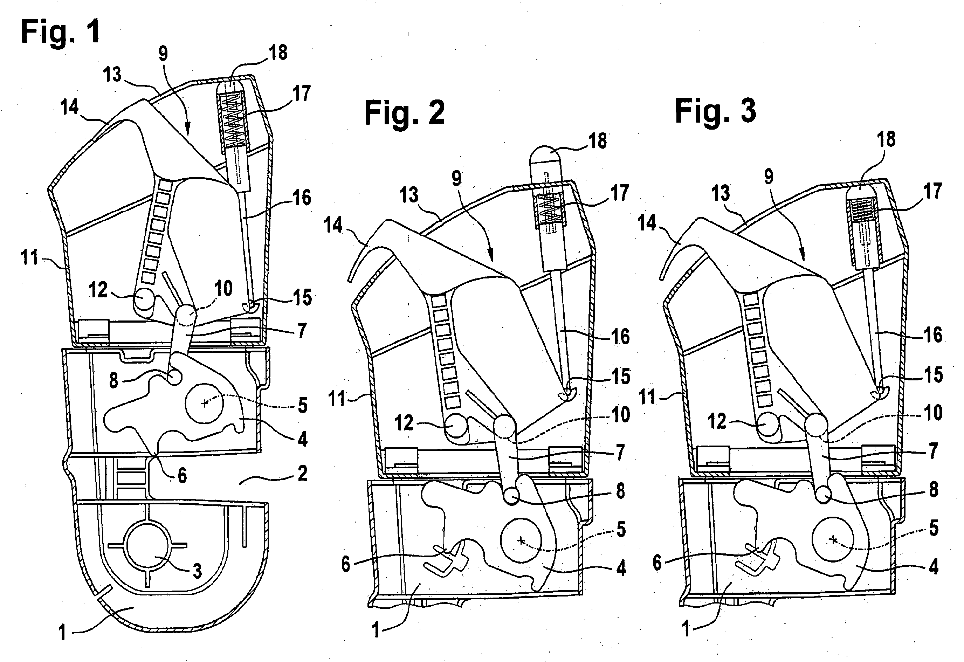

Die Sperrklinke 4 ist in der Verriegelungsgehäusehälfte 1 um eine Schwenkachse 5 zwischen einer Sperrstellung (Figur 1) und einer Entsperrstellung (Figuren 2 bis 10) schwenkbar.

An der Sperrklinke 4 ist das eine Ende einer Koppel 7 um eine zur Schwenkachse 5 parallele erste Achse 8 schwenkbar angelenkt, deren anderes Ende an einer Handhabe 9 um eine zweite Achse 10 schwenkbar angelenkt ist.

Die Handhabe 9 ist in einem mit der Verriegelungshälfte 1 verbundenen Gehäuse 11 um eine zur zweiten Achse 10 parallele zweite Schwenkachse 12 schwenkbar gelagert und besitzt einen durch eine Öffnung 13 des Gehäuses 11 nach außen ragenden Handgriff 14, mittels dessen die Handhabe 9 zwischen einer Verriegelungsstellung (Figur 1) und einer Entriegelungsstellung (Figur 2 bis 10) manuell schwenkbar ist, wobei die Sperrklinke 4 zwischen der Sperrstellung und der Entsperrstellung schwenkbar ist.

In einem radialen Abstand zur zweiten Schwenkachse 12 ist ein Übertragungselement einer Anzeigevorrichtung an der Handhabe 9 befestigt.

Bei dem Ausführungsbeispiel der Figuren 1 bis 3 ist ein Zug-/Druckelement 16 mit seinem einen Ende mittels einer Gelenkachse 15 an der Handhabe 9 angelenkt und erstreckt sich annähernd tangential zur Schwenkbewegung der Gelenkachse 15 um die zweite Schwenkachse 12 zur einer Schraubendruckfeder 17, die mit ihrem einen Ende mit dem ihr zugewandten Ende des Zug-/Druckelements 16 verbunden ist und sich in Längserstreckungsrichtung des Zug-/Druckelements 16 erstreckt.

Mit ihrem anderen Ende ist die Schraubendruckfeder 17 mit einem flachschieberartigen Anzeigeglied 18 verbunden, das in einer in dem Gehäuse 11 angeordneten Führung 19 verschiebbar geführt ist.

Dabei ist die Führung 19 zum Äußeren des Gehäuses 11 hin offen.

Die Ausbildung von Anzeigeglied 18 und Führung 19 ist bei allen dargestellten Ausführungsbeispielen von Anzeigevorrichtungen der Figuren 1 bis 10 gleich.

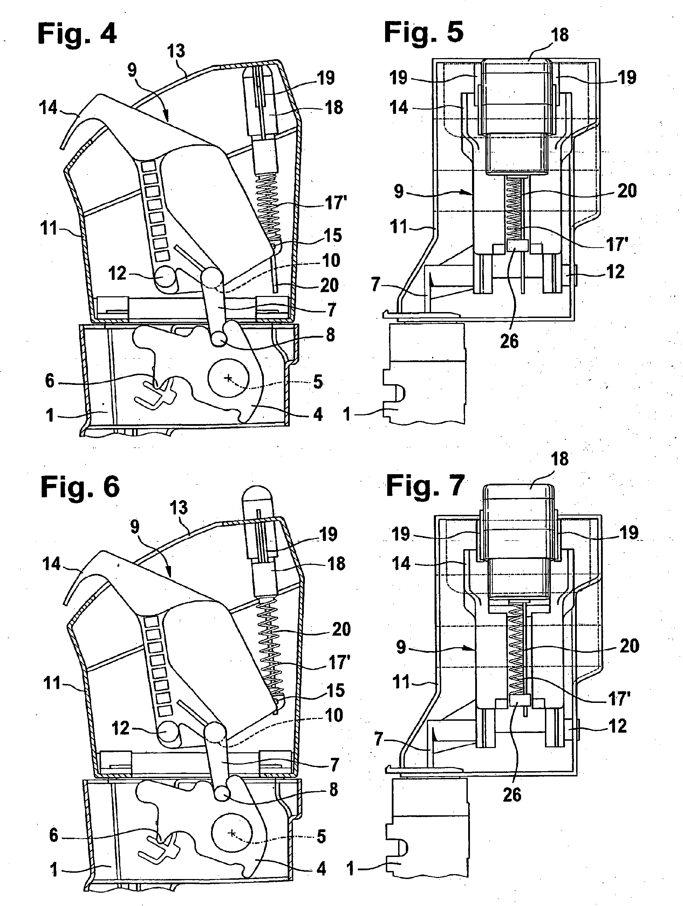

Bei den Ausführungsbeispielen der Figuren 4 bis 7 ist das Übertragungselement eine Schraubendruckfeder 17', die mit ihrem einen Ende mittels einer Gelenkachse 15 mit der Handhabe 9 und mit ihrem anderen Ende mit dem in das Gehäuse 11 gerichteten Ende des Anzeigeglieds 18 verbunden ist.

Axial zur Führung 19 weist das Anzeigeglied 18 eine Führungsstange 20 auf, die sich parallel neben der Schraubendruckfeder 17' erstreckt und eine Führungsöse 26 an der Handhabe 9 im Bereich der Gelenkachse 15 durchragt.

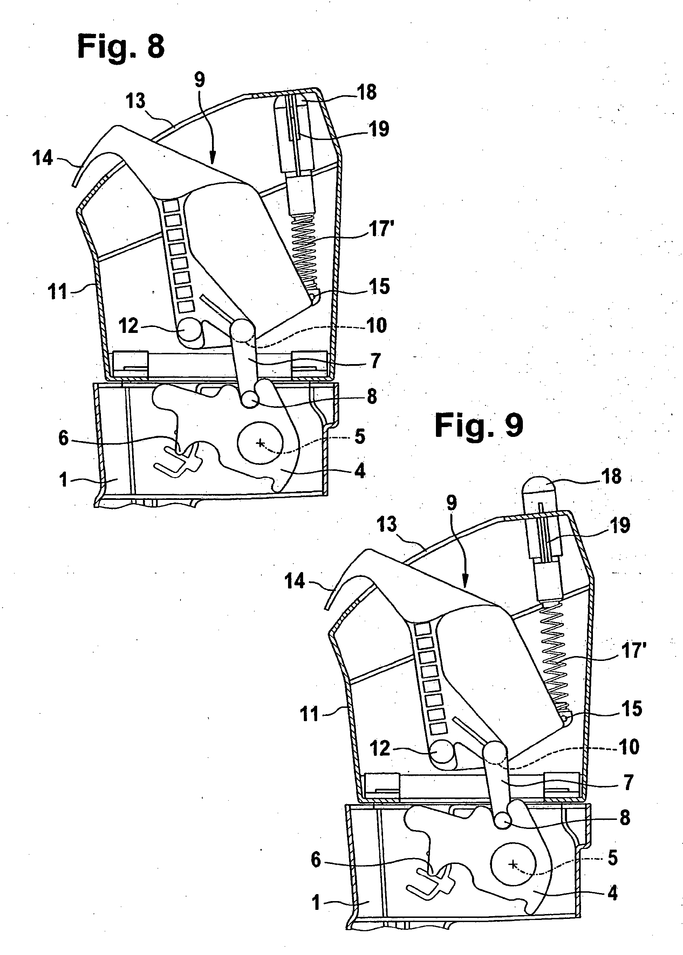

Das Ausführungsbeispiel der Figuren 8 und 9 der Anzeigevorrichtung entspricht dem Ausführungsbeispiel der Figuren 4 bis 7 mit der Ausnahme, daß keine Führungsstange 20 vorhanden ist.

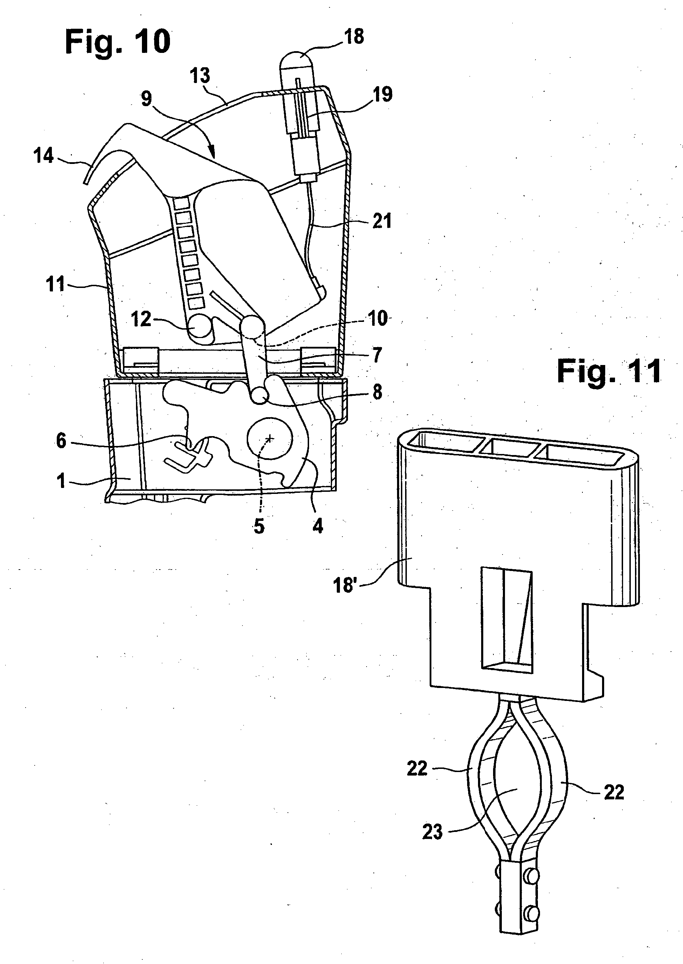

Bei dem Ausführungsbeispiel der Figur 10 besteht das Übertragungselement aus einer als Blattfeder 21 ausgebildeten Zug-/Druckstange, die sich annähernd in Erstreckungsrichtung der Führung 19 erstreckt und quer zu ihrer Längserstreckung elastisch auslenkbar ist.

Mit ihrem einen Ende ist die Blattfeder 21 mit dem Anzeigeglied 18 und mit ihrem anderen Ende mit der Handhabe 9 fest verbunden.

Das in Figur 11 dargestellte Ausführungsbeispiel eines Anzeigeglieds 18' mit Übertragungselement ist einteilig als Spritzgußteil ausgebildet.
Dabei ist das Übertragungselement ein Federelement aus zwei zueinander annähernd symmetrischen Biegestäben 22, die an ihren beiden Endbereichen fest miteinander verbunden und dadurch biegesteif sind. In ihrem mittleren Bereich ihrer Längserstreckung entfernen sie sich ein Ohr 23 bildend voneinander und sind elastisch biegbar.

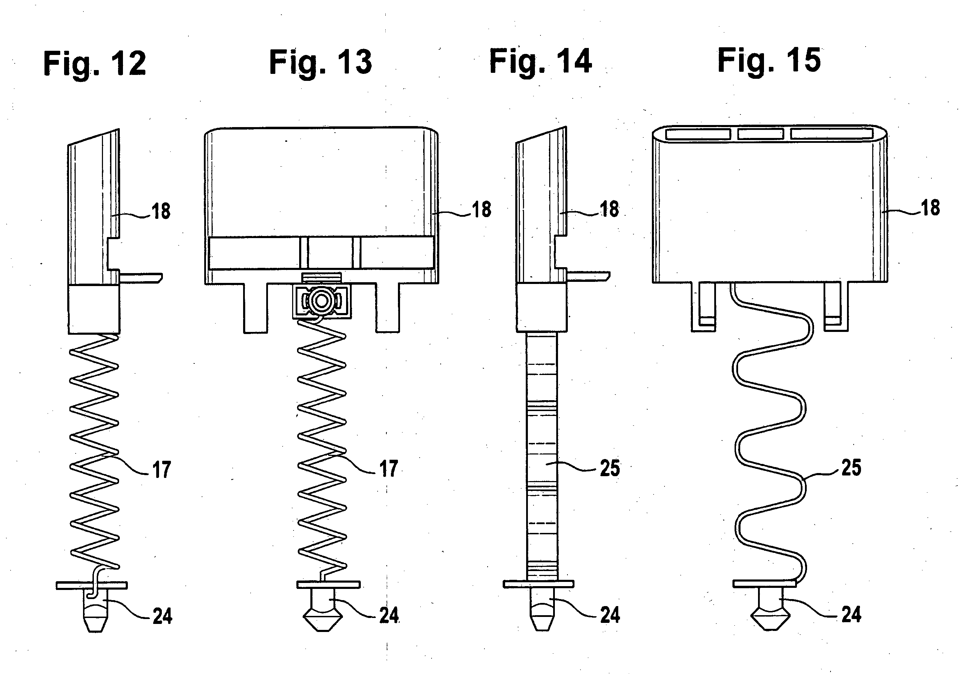

Bei dem in den Figuren 12 und 13 dargestellten Ausführungsbeispiel von Anzeigeglied 18 und Übertragungselement, das weitgehend diesen Teilen in den Figuren 8 und 9 entspricht, ist die Schraubendruckfeder 17 mit ihrem einen Ende mit dem Anzeigeglied 18 fest verbunden und weist an ihrem anderen Ende einen Klips 24 auf. Mit dem Klipps 24 ist die Schraubendruckfeder 17 in eine entsprechende Ausnehmung an der Handhabe 9 einklippsbar.

Bei dem Ausführungsbeispiel der Figuren 14 und 15 von Anzeigeglied 18 und Übertragungselement entspricht das Anzeigeglied 18 dem in den Figuren 12 und 13 dargestellten Anzeigeglied 18.

Ein als Meanderfederelement 25 aus einer meandrierenden Blattfeder ausgebildetes Übertragungselement ist einteilig mit dem Anzeigeglied 18 als Spritzgußteil aus Kunststoff hergestellt und weist an seinem dem Anzeigeglied 18 abgewandten Ende entsprechend den Figuren 12 und 13 einen Klipps 24 auf.

Die als Federelemente ausgebildeten Übertragungselemente der verschiedenen Ausführungsbeispiele sind in ihrer Erstreckung zwischen dem Anzeigeglied 18, 18' und der Handhabe 9 derart formsteif, daß sie bei einer Schwenkbewegung der Handhabe 9 als Druckstange wirkend diese Bewegung auf das Anzeigeglied 18, 18' übertragen und dieses in seiner Führung 19 verschieben.

Dabei befindet sich das Anzeigeglied 18, 18' in der Verriegelungsstellung der Handhabe 9 (Figur 1) vollständig in einer in der Führung 9 versenkten Nichtanzeigestellung und in der Entriegelungsstellung der Handhabe (Figuren 2, 6, 7, 9, 10) in eine teilweise aus der Führung 9 nach außen herausragenden Anzeigestellung.

Wird das in seiner Anzeigestellung befindliche Anzeigeglied 18, 18' durch eine äußere Kraft beaufschlagt, verschiebt sich das Anzeigeglied 18, 18' unter elastischer Verformung der als Federelemente ausgebildeten Übertragungselemente vollständig in die Führung 9 und ist darin geschützt.

Die Handhabe 9 bleibt dabei in ihrer Entriegelungsstellung.

Fällt die äußere Kraft weg, wird das Anzeigeglied 18, 18' durch das als Federelement ausgebildete Übertragungselement wieder in seiner Anzeigestellung bewegt.

Bei Verschwenken der Handhabe 9 aus der Entriegelungsstellung in die Verriegelungsstellung wirkt das Übertragungselement wieder als formsteife Zugstange und zieht das Anzeigeglied 18, 18' in die Führung 9 in seine Nichtanzeigestellung.

### Bezugszeichenliste

- 1: Verriegelungsgehäusehälfte
- 2: Eintrittschlitz
- 3: Lagerbohrung
- 4: Sperrklinke
- 5: Schwenkachse
- 6: Sperrhaken
- 7: Koppel
- 8: erste Achse
- 9: Handhabe
- 10: zweite Achse
- 11: Gehäuse
- 12: zweite Schwenkachse
- 13: Öffnung
- 14: Handgriff
- 15: Gelenkachse
- 16: Zug-/Druckelement
- 17: Schraubendruckfeder
- 17': Schraubendruckfeder
- 18: Anzeigeglied
- 18': Anzeigeglied
- 19: Führung
- 20: Führungsstange
- 21: Blattfeder
- 22: Biegestäbe
- 23: Ohr
- 24: Klipps
- 25: Meanderfederelement

## Patentansprüche

1. Anzeigevorrichtung zur Signalisierung der Nichtverriegelung einer umklappbaren Rückenlehne eines Sitzes, insbesondere eines Fondsitzes in einem Kraftfahrzeug, wobei die Anzeigevorrichtung eine um eine Schwenkachse (12) zwischen einer Verriegelungsstellung und einer Entriegelungsstellung schwenkbare Handhabe (9) aufweist, durch die eine Sperrklinke (4) einer Verriegelungsvorrichtung zwischen einer Sperrstellung und einer Entsperrstellung mitnehmbar ist, und durch die über ein Übertragungselement ein in einer Führung (19) zwischen einer in der Führung (19) versenkten Nichtanzeigestellung und einer teilweise aus der Führung (19) nach außen herausragenden Anzeigestellung geführtes Anzeigeglied (18, 18') verschiebbar antreibbar ist, wobei das Anzeigeglied (18) bei in der Entriegelungsstellung befindlicher Handhabe (9) durch Kraftbeaufschlagung seines aus der Führung (19) herausragenden äußeren Endbereichs entgegen einer Federkraft in seine Nichtanzeigestellung bewergbar ist, wobei das Übertragungselement ein sowohl mit der Handhabe (9) als auch mit dem Anzeigeglied (18, 18') fest verbundenes Federelement ist, **dadurch gekennzeichnet, daß**
das Übertragungselement bei einem Verschiebeantrieb des Anzeigegliedes (18, 18') durch die Handhabe (9) derart formsteif ist, daß das Übertragungselement sowohl als Druckstange wirkend den Verschiebeantrieb des Anzeigegliedes (18, 18') von der Nichtanzeigestellung in die Anzeigestellung als auch als Zugstange wirkend den Verschiebeantrieb des Anzeigegliedes (18, 18') von der Anzeigestellung in die Nichtanzeigestellung ausführt, und wobei das Übertragungselement bei in Entriegelungsstellung befindlicher Handhabe (9) und einer Bewegung des Anzeigeglieds (18, 18') aus der Anzeigestellung in die Nichtanzeigestellung elastisch verformbar ist.

2. Anzeigevorrichtung nach Anspruch 1, **dadurch gekennzeichnet, daß** das Übertragungselement in einem radialen Abstand zur Schwenkachse (12) an der Handhabe (9) angreift.

3. Anzeigevorrichtung nach Anspruch 2, **dadurch gekennzeichnet, daß** das Federelement eine quer zu ihrer Längserstreckung elastisch auslenkbare Zug-/Druckstange ist.

4. Anzeigevorrichtung nach Anspruch 2, **dadurch gekennzeichnet, daß** das Federelement ein Meanderfederelement (25) aus einem federelastischen Werkstoff ist.

5. Anzeigevorrichtung nach Anspruch 2, **dadurch gekennzeichnet, daß** das Federelement zwei zueinander annähernd symmetrische Biegestäbe (22) aufweist, die an ihren beiden Endbereichen fest miteinander verbunden sind und sich im mittleren Bereich ihrer Längserstreckung ein Ohr (23) bildend voneinander entfernen.

6. Anzeigevorrichtung nach einem der vorhergehenden Ansprüche, **dadurch gekennzeichnet, daß** die Anzeigevorrichtung in einem die Führung (19) des Anzeigeglieds (18, 18') aufweisenden Gehäuse (11) angeordnet ist.

7. Anzeigevorrichtung nach einem der vorhergehenden Ansprüche, **dadurch gekennzeichnet, daß** das Anzeigeglied (18, 18') ganz oder teilweise eine Warnfarbe aufweist.

8. Anzeigevorrichtung nach einem der vorhergehenden Ansprüche, **dadurch gekennzeichnet, daß** das Anzeigeglied quer zu seiner Bewegungsrichtung elastisch verformbar ist.

## Claims

1. Indicator apparatus for signaling that a foldable backrest of a seat, in particular a rear seat in a motor vehicle, is not locked, wherein the indicator apparatus comprises a handle (9) that can be pivoted between a locked position and an unlocked position about a pivot axis (12) and by means of which handle a catch (4) of a locking apparatus can be carried along between a blocked position and an unblocked position, and by means of which handle, via a transmission element, an indicator element (18, 18'), which is guided in a guide (19) between a non-indication position in which it is recessed in the guide (19) and an indication position in which it protrudes outward partially out of the guide (19), can be moved in a displaceable manner, wherein the indicator element (18) can be moved against a spring force into its non-indication position by the application of force to its outer end region that protrudes out of the guide (19) when the handle (9) is located in the unlocked position, wherein the transmission element is a spring element that is fixedly connected both to the handle (9) and also to the indicator element (18, 18'), **characterized in that** the transmission element is of a rigid shape as the indicator element (18, 18') is moved in a displaceable manner by the handle (9), in such a way that the transmission element, acting as push rod, effects the movement of the indicator element (18, 18') by displacement from the non-indication position into the indication position and also, acting as pull rod, effects the movement of the indicator element (18, 18') by displacement from the indication position into the non-indication position, and wherein the transmission element can be deformed in an elastic manner when the handle (9) is located in the unlocked position and the indicator element (18, 18') is moved out of the indication position into the non-indication position.

2. Indicator apparatus according to Claim 1, **characterized in that** the transmission element engages the handle (9) at a radially spaced disposition with respect to the pivot axis (12).

3. Indicator apparatus according to Claim 2, **characterized in that** the spring element is a push/pull rod which can be deflected in an elastic manner transversely with respect to its longitudinal extension.

4. Indicator apparatus according to Claim 2, **characterized in that** the spring element is a meander spring element (25) manufactured in a resilient-elastic material.

5. Indicator apparatus according to Claim 2, **characterized in that** the spring element comprises two mutually approximately symmetrical bending rods (22) that are fixedly connected to each other at their two end regions and in the middle region of their longitudinal extension are spaced apart from each other forming an ear shape (23).

6. Indicator apparatus according to any one of the preceding claims, **characterized in that** the indicator apparatus is arranged in a housing (11) that comprises the guide (19) of the indicator element (18, 18').

7. Indicator apparatus according to any one of the preceding claims, **characterized in that** the indicator element (18, 18') is either completely or partially in a warning color.

8. Indicator apparatus according to any one of the preceding claims, **characterized in that** the indicator element can be deformed in an elastic manner transversely with respect to its direction of movement.

## Revendications

1. Dispositif indicateur servant à signaler le non-verrouillage d'un dossier rabattable d'un siège, notamment d'un siège arrière dans un véhicule automobile, le dispositif indicateur comportant une manette (9) pouvant basculer autour d'un axe de pivotement (12) entre une position de verrouillage et une position de déverrouillage, un cliquet de blocage (4) d'un dispositif de verrouillage pouvant être engrené entre une position de blocage et une position de déblocage par ladite manette et un élément d'affichage (18, 18') guidé dans un guide (19) entre une position de non-affichage rentrée dans le guide (19) et une position d'affichage saillant en partie vers l'extérieur hors du guide (19) pouvant être entraîné de façon coulissante par ladite manette via un élément de transmission, l'élément d'affichage (18) pouvant être déplacé dans sa position de non-affichage lorsque la manette (9) se trouve dans la position de déverrouillage par application d'une force de sa zone d'extrémité extérieure saillant hors du guide (19), à l'encontre d'une force de ressort, l'élément de transmission étant un élément de ressort relié fixement tant à la manette (9) qu'à l'élément d'affichage (18, 18'), **caractérisé en ce que** l'élément de transmission est indéformable de telle sorte qu'en cas d'entraînement par coulissement de l'élément d'affichage (18, 18') par la manette (9), l'élément de transmission exécute, par son action en tant que barre de pression, l'entraînement par coulissement de l'élément d'affichage (18, 18') de la position de non-affichage dans la position d'affichage et par action en tant que barre de traction, l'entraînement par coulissement de l'élément d'affichage (18, 18') de la position d'affichage dans la position de non-affichage et l'élément de transmission pouvant être déformé de façon élastique lorsque la manette (9) se trouve dans la position de déverrouillage et que l'élément d'affichage (18, 18') se déplace de la position d'affichage dans la position de non-affichage.

2. Dispositif indicateur selon la revendication 1, **caractérisé en ce que** l'élément de transmission s'engrène à la manette (9) à une certaine distance radiale par rapport à l'axe de pivotement (12).

3. Dispositif indicateur selon la revendication 2, **caractérisé en ce que** l'élément de ressort est une barre de traction/pression s'étendant de façon transversale sous charge de traction transversalement à leur extension longitudinale.

4. Dispositif indicateur selon la revendication 2, **caractérisé en ce que** l'élément de ressort est un élément de ressort à spirale (25) réalisé à partir d'une matière élastique de ressort.

5. Dispositif indicateur selon la revendication 2, **caractérisé en ce que** l'élément de ressort comporte deux tiges de flexion (22) approximativement symétriques l'une par rapport à l'autre reliées fixement entre elles au niveau de leurs deux zones d'extrémité et s'écartant l'une de l'autre en formant une oreille (23) dans la zone centrale de leur extension longitudinale.

6. Dispositif indicateur selon l'une quelconque des revendications précédentes, **caractérisé en ce que** le dispositif indicateur est disposé dans un carter (11) comportant le guide (19) de l'élément d'affichage (18, 18').

7. Dispositif indicateur selon l'une quelconque des revendications précédentes, **caractérisé en ce que** l'élément d'affichage (18, 18') comporte pour tout ou partie une couleur d'avertissement.

8. Dispositif indicateur selon l'une quelconque des revendications précédentes, **caractérisé en ce que** l'élément d'affichage peut être déformé de façon élastique transversalement à sa direction de déplacement.
